# EUROPÄISCHE PATENTANMELDUNG

(11) **EP 3 435 031 A1**
(43) Veröffentlichungstag der Anmeldung: **30.01.2019**
(21) Anmeldenummer: 18184725.2
(22) Anmeldetag: 20.07.2018
(51) Int. Cl.: G01B 11/24, G01B 11/25, G01N 23/04

(54) **AUFMASSGERÄT UND VERFAHREN ZUR ERSTELLUNG EINES 3D-MODELLS**

(30) Priorität: 27.07.2017 DE 102017117056
(71) Anmelder: Testo SE & Co. KGaA, 79853 Lenzkirch (DE)
(72) Erfinder: Evers-Senne, Jan-Friso, 79822 Titisee-Neustadt (DE); Schätzle, Thomas, 79215 Biederbach (DE); Zahn, Patrick, 79822 Titisee-Neustadt (DE)
(74) Vertreter: Mertzlufft-Paufler, Cornelius

(57) **Zusammenfassung**

Aufmaßgerät (6), mit einer längenvariablen Haltevorrichtung (10), an der am distalen Ende eine Bildaufnahmevorrichtung (9) zur Aufnahme von Bildern eines zu vermessenden Objekts (1) angeordnet ist und an der am prixomalen Ende (16) eine Anzeigevorrichtung (17) für eine Echtzeitdarstellung eines Bildes von der Bildaufnahmevorrichtung (9) angeordnet ist, wobei vom proximalen Ende (16) der Haltevorrichtung aus ein Bildaufnahmevorgang auslösbar ist. (Fig. 1)

## Beschreibung

Die Erfindung beschreibt ein Aufmaßgerät, mit einer Bildaufnahmevorrichtung zur Aufnahme von Bildern eines zu vermessenden Objekts, und ein Verfahren zur Erstellung eines 3D-Modells mit Hilfe dieses Aufmaßgeräts.

Es ist bekannt, zur Erstellung eines 3D-Modells eine Vielzahl von Bildern eines Objektes aus unterschiedlichen Positionen und unterschiedlichen Blickwinkeln anzufertigen, die für die Aufstellung eines Gleichungssystems genutzt werden, um ein dreidimensionales Modell eines aufgenommenen Objektes zu berechnen.

Es ist bekannt, derartige Vorrichtungen, die zur Aufnahme der Bilder verwendbar sind, in ein Handgerät zu integrieren.

Oftmals ist jedoch bei der Erstellung von 3D-Modellen zu Gebäuden das Problem, dass der Benutzer sehr dicht am Objekt stehen muss, weil weitere Objekte in der Nachbarschaft ein Entfernen von dem zu vermessenden Objekt verhindern.

In diesem Fall ergeben sich aus der Position des Benutzers am Erdboden verdeckte Bereiche des Objekts, für die dann kein 3D-Modell berechnet werden kann.

In solchen Fällen ist es bekannt, das Gebäude auch von höheren Positionen aus zu fotografieren. Dies kann beispielsweise von höheren Stockwerken eines gegenüberliegenden Gebäudes erfolgen. Es kann aber auch eine Hebebühne, ein Kran, ein Gerüst oder dergleichen eingesetzt werden, um eine erhöhte Kameraposition zu erreichen. Alle diese Verfahren sind jedoch umständlich, langwierig und teuer in der Umsetzung.

Es ist auch bekannt, beispielsweise einen Laserscanner oder eine Kamera an einem Hochstativ zu verwenden, um an nicht zugängliche Bereiche zu gelangen. Dabei kann jedoch keine Vorschau erfolgen, so dass die Aufnahmen "blind" erfolgen. Zudem ist der Einsatz eines Laserscanners teuer. Eine Kontrolle des aufgenommenen Bereichs ist hier nicht möglich, so dass unter Umständen Aufnahmen umständlich und zeitaufwändig widerholt werden müssen.

Der Einsatz von Kameradrohnen ist prinzipiell teuer und kann rechtlichen Einschränkungen unterliegen, die die Verwendung unmöglich machen.

Aufgabe der Erfindung ist es eine Vorrichtung zu schaffen, mit der auf einfache und kostengünstige Weise Gebäude fotografiert werden können um daraus ein 3D-Modell zu berechnen.

Diese Aufgabe wird erfindungsgemäß durch ein Aufmaßgerät mit den Merkmalen des Anspruch 1 und durch ein Verfahren nach Anspruch 11 gelöst.

Das erfindungsgemäße Aufmaßgerät ist insbesondere dadurch gekennzeichnet, dass das Aufmaßgerät eine längenvariable Haltevorrichtung aufweist, dass die Bildaufnahmevorrichtung an der Haltevorrichtung angeordnet ist, dass am proximalen Ende der Haltevorrichtung eine Anzeigevorrichtung für eine Darstellung eines Bildes von der Bildaufnahmevorrichtung angeordnet ist und dass vom proximalen Ende der Haltevorrichtung aus ein Bildaufnahmevorgang auslösbar ist. Bevorzugt ist die Darstellung synchronisiert mit einer von der Bildaufnahmevorrichtung erfassten Bildsequenz, beispielsweise eine Echtzeitdarstellung.

Der Vorteil dabei ist, dass der Benutzer in der Anzeigevorrichtung ein Echtzeitbild der Bildaufnahmevorrichtung erhält, welches zur Ausrichtung der Bildaufnahmevorrichtung verwendbar ist. Es besteht also durch die Anzeigevorrichtung die Möglichkeit den Bildausschnitt zu Kontrollieren und zu Bestimmen, bevor ein Bildaufnahmevorgang ausgelöst wird.

Dadurch kann der Benutzer die Bildaufnahmevorrichtung insbesondere so ausrichten, dass alle Details, für die ein 3D-Modell erzeugt werden soll, sichtbar sind. Darüber hinaus kann sichergestellt werden, dass genügend Überdeckung zwischen den aufgenommenen Bildern vorhanden ist, so dass die einzelnen Bilder zueinander registrierbar sind.

Darüber hinaus ist eine Bildaufnahme in Höhen bis zehn Meter einfach vom Boden aus möglich. Dazu sind keine Genehmigungen notwendig oder aufwändige Aufbauarbeiten. Das erfindungsgemäße Aufmaßgerät ist zudem kompakt und einfach in einem normalen PKW transportierbar.

Die längenvariable Haltevorrichtung kann auf unterschiedliche Weise realisiert sein. Die Haltevorrichtung kann beispielsweise mehrere gerade Elemente, etwa Stangen oder Rohre, aufweisen, die ineinander steckbar sind. Auf diese Weise kann durch einfaches Hinzufügen oder Entfernen eines oder mehrere Elemente die Länge verändert werden.

Die Haltevorrichtung könnte auch in der Art einer Scherenhebebühne ausgebildet sein, so dass die Länge einstellbar ist ohne Einzelteile mitzuführen.

Insbesondere vorteilhaft ist es jedoch, wenn die Haltevorrichtung als Teleskopstange ausgebildet ist. Dadurch ist die Haltevorrichtung in ganz eingefahrenem Zustand kompakt und einfach transportierbar. Dennoch kann die Länge auf einfache Weise in einem sehr großen Bereich verstellbar sein, wobei sich primär nur der Durchmesser der Haltevorrichtung ändert. Auf diese Weise sind auch Längen in ganz ausgefahrenem Zustand bis vier oder sogar sechs Meter realisierbar.

Vorzugsweise weist die Haltevorrichtung eine Arretiereinrichtung ein, um eine eingestellte Länge zu fixieren. Dadurch kann verhindert werden, dass sich die Länge unbeabsichtigt verändert, während einer Bildaufnahme.

Besonders vorteilhaft ist es, wenn der Teleskopauszug motorisch angetrieben ist, beispielsweise mit einem Elektromotor. Dabei kann der Elektromotor oder ein Getriebe ein ausreichende Haltemoment aufweisen, dass eine Fixierung im Stillstand automatisch erfolgt.

Um eine möglichst große Arbeitshöhe zu erzielen ist es zweckmäßig, wenn die Bildaufnahmevorrichtung am distalen Ende der Haltevorrichtung angeordnet ist.

In einer vorteilhaften Ausführung der Erfindung besteht zwischen der Bildaufnahmevorrichtung und der Anzeigevorrichtung eine Datenverbindung, über die Bild- und/oder Steuerdaten übertragbar sind. Dadurch können neben der Echzeitdarstellung der Bilddaten auch Steuersignale, wie beispielsweise für das Auslösen der Bildaufnahme, übertragen werden. Die Datenverbindung ist insbesondere drahtgebunden, wobei ein Kabel, etwa für eine USB Verbindung, an der Haltevorrichtung entlanggeführt ist.

Besonders vorteilhaft ist es jedoch, wenn die Datenverbindung drahtlos ausgebildet ist. Dazu kann beispielsweise eine Funkverbindung verwendet werden, wie beispielsweise Bluetooth oder WLAN. Dies hat den Vorteil, dass keine Aufwicklung oder andere Verstaumöglichkeit für ein Kabel vorgesehen sein muss.

Da die zu übertragene Datenmenge für eine Echtzeitdarstellung, also ein Livevideostrom, sehr groß ist, ist es vorteilhaft, wenn die Bildaufnahmevorrichtung zur Komprimierung von Bilddaten und zur Datenübertragung der komprimierten Bilddaten über die Datenverbindung eingerichtet ist. Auf diese Weise kann die zu übertragene Datenmenge reduziert werden, wodurch eine möglichst fließende oder ruckfreie Ausrichtung oder Überwachung der Ausrichtung der Bildaufnahmevorrichtung möglich ist. Auf diese Weise sind auch die aufgenommenen Bilder komprimiert übertragbar, so dass diese ebenfalls mit der Anzeigevorrichtung kontrollierbar sind.

Gemäß einer ersten Ausführung der Erfindung kann neben den Bilddaten zur Echtzeitdarstellung auch ein oder mehrere Steuersignale übertragen werden. Ein solches Steuersignal kann beispielsweise das Auslösen eines Bildaufnahmevorgangs sein.

Eine alternative Ausführung sieht vor, dass die Bildaufnahmevorrichtung eine eigene Bedienvorrichtung aufweist und der Bildinhalt dieser Bedienvorrichtung auf die Anzeigevorrichtung gespiegelt wird. Es erfolgt dabei eine Fernbedienung der Bedienvorrichtung über die Anzeigevorrichtung.

Zur Berechnung eines 3D-Modells ist es jedoch vorteilhaft, möglichst viele Bildinformationen zur Verfügung zu haben. Daher ist es besonders zweckmäßig, wenn die Bildaufnahmevorrichtung zur Speicherung der unkomprimierten Bilddaten eingerichtet ist, insbesondere in einem Bilddatenspeicher. Zur Berechnung des 3D-Modells kann somit auf die Rohdaten der Bildaufnahmevorrichtung zurückgegriffen werden.

An der Haltevorrichtung, insbesondere am proximalen Ende können neben der Anzeigevorrichtung dedizierte Bedienelemente angeordnet sein, beispielsweise zum Auslösen eines Bildaufnahmevorgangs.

In einer bevorzugten Ausführung der Erfindung ist die Anzeigevorrichtung zur Steuerung der Bildaufnahmevorrichtung eingerichtet, insbesondere zum Auslösen eines Bildaufnahmevorgangs.

Bei digitalen Kameras ist es verbreitet, einen sogenannten rolling shutter (rollenden Verschluss) zu verwendet, bei dem der Bildsensor Zeilenweise ausgelesen wird. Dadurch tritt bei Kamerabewegungen ein typischer zeilenweiser Versatz auf. Dieser Versatz kann bei der späteren Berechnung des Modells störend sein und muss aufwändig herausgerechnet werden.

Eine besonders vorteilhafte Ausführung der Erfindung sieht daher vor, dass die Bildaufnahmevorrichtung einen Globalverschluss (global shutter) aufweist. Bei diesem wird beim Auslösen eines Bildaufnahmevorgangs der Zustand der einzelnen Bildpixel des gesamten Bildsensors jeweils in einem Hintergrundspeicherelement gesichert. Diese werden dann ausgelesen und als Bild gespeichert. Dadurch wird der zeilenweise Versatz des rolling shutters verhindert und die Bilddaten müssen nicht korrigiert werden.

In einer weiteren vorteilhaften Ausführung weist die Bildaufnahmevorrichtung ein Fischaugenobjektiv auf, wodurch ein möglichst großer Bildwinkel erfasst werden kann.

Die Haltevorrichtung weist vorzugsweise einen Handgriff auf, mit dem eine gute und sichere Handhabung möglich ist. Zur Unterstützung kann die Haltevorrichtung auch beispielsweise einen Schulter- und/oder Hüfttragegurt besitzen, damit insbesondere bei großen Längen, die Last besser vom Benutzer tragbar ist.

Insbesondere vorteilhaft ist es jedoch, wenn die Haltevorrichtung einen Fuß zum Abstellen auf einer Unterlage aufweist. Dadurch wir die Last des Aufmaßgerätes vollständig auf die Unterlage, etwa der Erdboden, geleitet. Der Benutzer kann dann nur die Ausrichtung und Führung übernehmen.

Insbesondere die Ausbildung der Haltevorrichtung als einfüßige Teleskopstange hat den Vorteil, dass die Stange auf dem Erdboden abgestellt und trotzdem noch mit einer gewissen Schwenkfreiheit versehen werden kann.

Dies ermöglicht die Ausrichtung der Bildaufnahmevorrichtung so, dass wichtige Details aufgenommen werden können, ohne dass die Teleskopstange eingeholt werden muss. In der Praxis wird der Benutzer die Teleskopstange zwischen den einzelnen Bildaufnahmen um einen fest vorgegebenen Empfehlungsabstand, beispielsweise einen Meter, versetzen.

Prinzipiell ist es möglich, dass die Bildaufnahmevorrichtung fest an der Haltevorrichtung fixiert ist. Eine Ausrichtung der Bildaufnahmevorrichtung kann dann durch Drehung der Haltevorrichtung erfolgen. Dadurch wird jedoch auch die Anzeigevorrichtung verdreht, so dass ein Benutzer eventuell nicht mehr die volle Sicht hat. In einer vorteilhaften Ausführung der Erfindung ist daher die Anzeigevorrichtung beweglich, insbesondere um die Teleskopstange drehbar, angeordnet.

In einer besonders zweckmäßigen Ausführung der Erfindung weist die Haltevorrichtung eine beweglich gelagerte Aufnahmeeinheit für die Bildaufnahmeeinrichtung auf und die Aufnahmeeinheit ist über einen fernsteuerbaren, insbesondere elektrischen und/oder hydraulischen, Antrieb vom proximalen Ende der Haltevorrichtung und/oder durch die Anzeigevorrichtung ausrichtbar. Dadurch kann die Bildaufnahmevorrichtung unabhängig von der Haltevorrichtung beispielsweise verschwenkt werden. Dies kann in bestimmten Situationen, etwa wenn die Haltevorrichtung ortsfest ist, vorteilhaft sein.

Bei einer vorteilhaften Ausgestaltung kann vorgesehen sein, dass ein Abstandssensor ausgebildet, ist, mit welchem ein Abstand zu dem Objekt messbar ist. Somit ist eine Skalierungsinformation für das 3D-Modell gewinnbar. Die Verwendung eines Markers ist somit verzichtbar. Bevorzugt ist der Abstandssensor in die Bildaufnahmevorrichtung integriert.

Die Erfindung umfasst weiterhin auch ein Verfahren zur Berechnung und Erstellung eines 3D-Modells mit einem erfindungsgemäßen Aufmaßgerät. Dieses Verfahren ist gekennzeichnet dadurch, dass die Haltevorrichtung auf eine erste Länge eingestellt wird und damit wenigstens ein Bild eines Objekts aufgenommen wird, dass die Haltevorrichtung danach auf eine zweite Länge eingestellt wird, die eine Aufnahme von Bildern mit ausreichend vertikaler Überdeckung zur ersten Länge erlaubt und Bilder des Objekts aufgenommen werden und dass die Länge so lange verändert wird, bis das Objekt vollständig aufgenommen ist.

Auf diese Weise lassen sich Objekte, insbesondere Gebäude, auch in großen und sonst unzugänglichen oder verdeckten Bereichen sehr genau und einfach vermessen.

Insbesondere sind die bei der ersten Länge und der zweiten Länge aufgenommenen Bilder untereinander und/oder mit weiteren, beispielsweise ohne Haltevorrichtung aufgenommenen Bildern, zur Berechnung des 3D-Modells kombinierbar.

Bei einer Ausgestaltung kann vorgesehen sein, dass an dem Objekt zuerst eine Markertafel angeordnet wird, die in wenigstens einem Bild aufgenommen wird, und daraus eine Skalierungsinformation für das 3D-Modell gewonnen wird. Somit ist eine separate Abstandsmessung verzichtbar. Alternativ kann die Skalierung auch mit einem Abstandssensor, beispielsweise dem bereits beschriebenen Abstandssensor, durch Messung eines Abstands ermittelt werden. Die Skalierungsinformation ermöglicht, ein korrekt skaliertes 3D-Modell zu erzeugen bzw. ein 3D-Modell mit einem bekannten Maßstab zu erzeugen.

Bei einer Ausgestaltung der Erfindung kann vorgesehen sein, dass zur Registrierung der einzelnen Bilder zueinander robuste und präzise Bildmerkmale in den Bildern identifiziert und einander zugeordnet werden. Hierbei haben robuste Merkmale den Vorteil, dass sie leicht automatisch identifizierbar sind, während präzise Merkmale den Vorteil haben, Bezugspunkte für Längenmessungen zu definieren. Die Ausgestaltung kombiniert diese Vorteile.

Die Erfindung ist nachfolgend anhand eines bevorzugten Ausführungsbeispiels mit Bezug auf die beiliegende Zeichnung näher erläutert.

Es zeigt:

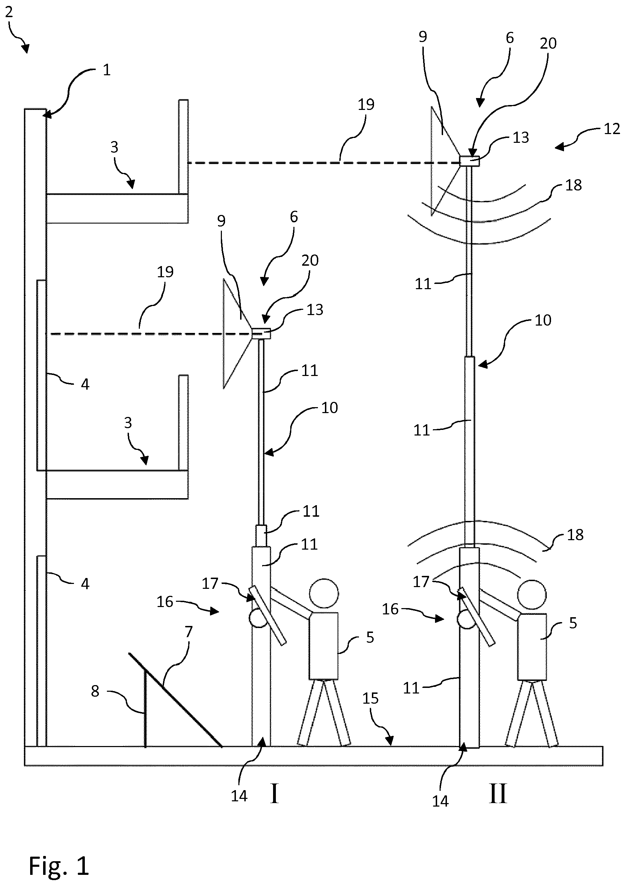

- Fig. 1: eine schematische Darstellung eines erfindungsgemäßen Aufmaßgeräts in verschiedenen Arbeitsstellungen.

Die Fig. 1 zeigt schematisch eine seitliche Schnittansicht einer zu vermessenden Fassade 1 eines Gebäudes 2. Die Fassade 1 im Beispiel zeigt drei Stockwerke des Gebäudes 2, wobei in den beiden Obergeschossen jeweils ein Balkon 3 und in allen Stockwerken eine Tür 4 vorhanden ist.

Weiterhin zeigt die Fig. 1 einen Benutzer 5 mit einem erfindungsgemäßen Aufmaßgerät 6 zur bildlichen Erfassung der Fassade 1. Vor der Fassade 1 ist eine Markertafel 7 aufgestellt, die eine Skalierung des erstellten 3D-Modells erlaubt und erleichtert. Im Bild ist die Markertafel 7 an einem schrägen Ständer 8 gehalten. Selbstverständlich kann die Markertafel 7 auch parallel zur Fassade 1 ausgerichtet und/oder anderweitig befestigt sein.

Das Aufmaßgerät 6 weist eine Digitalkamera 9 als Bildaufnahmevorrichtung auf. Die Kamera 9 besitzt vorzugsweise ein Fischaugenobjektiv und einen sogenannten global shutter (Globalverschluss), der das Entstehen der typischen rolling shutter Verzerrungen verhindert.

Das erfindungsgemäße Aufmaßgerät 6 weist eine Teleskopstange 10 als längenverstellbare Haltevorrichtung auf. In der gezeigten Ausführung weist die Teleskopstange 10 mehrere rohrförmige Elemente 11 auf, die koaxial ineinandergreifen. Die Teleskopstange 10 ist durch axiales auseinanderziehen der einzelnen Elemente 11 stufenlos in der Länge verstellbar. Selbstverständlich sind andere Ausführungen der Haltevorrichtung möglich, bei denen die Längenverstellung auf andere Weise erfolgt. Die Erfindung ist daher nicht auf die gezeigte beispielhafte Ausführung beschränkt.

Die Teleskopstange 10 kann vorzugsweise durch einen elektrischen, hydraulischen oder pneumatischen Antrieb verstellbar sein, da dadurch zum einen die Längenverstellung vereinfacht ist und eine eingestellte Länge selbsttätig gehalten wird.

An dem distalen Ende 12 der Teleskopstange 10 ist im Beispiel eine beweglich gelagerte Aufnahmeeinheit 13 angeordnet, an der die Kamera 9 befestigt ist. Damit kann die Kamera 9 beispielsweise horizontal und/oder vertikal verschwenkt werden, um den Bildausschnitt genau zu justieren. Alternativ kann die Kamera 9 auch fixiert an der Teleskopstange 10 angeordnet sein. Ein Verschwenken ist dann nur durch eine Bewegung der Teleskopstange 10 möglich.

Die Teleskopstange 10 ist im Beispiel so ausgebildet, dass sie einen Standfuß 14 aufweist, mit dem die Teleksopstange 10 auf dem Boden 15 aufsteht. Dadurch muss ein Benutzer 5 nicht dauernd das gesamte Gewicht tragen und die Benutzung ist stark vereinfacht.

Am proximalen Ende 16, im Beispiel etwa auf Brusthöhe des Benutzers 5, ist eine Anzeigevorrichtung 17 angeordnet. Die Anzeigevorrichtung 17 ist im Beispiel um eine horizontale Achse drehbar gelagert, wodurch die Anzeigevorrichtung 17 an unterschiedlich große Benutzer 5 anpassbar ist. Die Anzeigevorrichtung 17 kann beispielsweise auch ein handelsübliches Tablet oder ein Laptop sein. Insbesondere weist die Anzeigevorrichtung einen Berührungsempfindlichen Bildschirm (Touchscreen) auf.

Die Kamera 9 und die Anzeigevorrichtung 17 sind jeweils mit einer Funkschnittstelle 18 zur Datenübertragung ausgestattet. Diese Funkschnittstelle 18 ist beispielsweise als WLAN ausgebildet, das eine sehr hohe Datenrate erlaubt und einfach und kostengünstig implementierbar ist. Es sind jedoch auch andere, insbesondere dedizierte Funkprotokolle, möglich.

Die Kamera 9 ist erfindungsgemäß dazu eingerichtet, dass die Bilddaten komprimiert und als Live-Bild in Echtzeit an die Anzeigevorrichtung 17 übertragen wird. Dadurch kann auf der Anzeigevorrichtung 17 eine Echtzeitdarstellung des Kamerabildes erfolgen. Dieses Live-Bild dient zur Kontrolle und zur Wahl des Bildausschnittes. Der Benutzer kann auf diese Weise sehr einfach und schnell die richtigen Bilder aufnehmen.

Die Anzeigevorrichtung 17 weist dazu mindestens eine Auslösevorrichtung auf, bei deren Betätigung durch den Benutzer 5 über die Funkschnittstelle 18 ein Steuersignal an die Kamera 9 gesendet wird, das dort einen Bildaufnahmevorgang auslöst. Die Kamera 9 speichert daraufhin ein unkomprimiertes Bild, beispielsweise die Rohdaten des Bildsensors. Diese Bild enthält damit die bestmögliche Auflösung und Detailtiefe um im späteren Verlauf darin Merkmale zu identifizieren.

Die unkomprimierten Bilder werden in einem Bildspeicher innerhalb der Kamera 9 gespeichert. Sie können dort später ausgelesen werden. Es ist jedoch auch möglich, dass nach der Bildaufnahme, wenn kein Live-Bild mehr benötigt wird, die Bilddaten in unkomprimierter Form an die Anzeigevorrichtung 17 oder eine separate Berechnungseinheit über die Funkschnittstelle 18 übertragen werden.

Zur Skalierung des 3D-Modells kann alternativ oder zusätzlich zur Markertafel 7 auch ein Abstandssensor 20 in der Bildaufnahmevorrichtung 10 angeordnet sein, mit dem ein Abstand 19 zum Objekt bestimmt werden kann. Diese Abstandsinformation kann mit den Bildrohdaten gespeichert und später zur Skalierung verwendet werden.

Die Vermessung der Fassade 1 und die Erstellung eines 3D-Modells können gemäß dem nachfolgend beschriebenen Verfahren erfolgen.

Zunächst wird die Markertafel 7 vor der Fassade 1 aufgestellt. Das Aufmaßgerät 6 wird aufgebaut, wobei die Teleskopstange 10 zunächst ganz eingefahren ist. Es werden vom Erdgeschoss sich überdeckende Bilder aufgenommen, wobei zumindest auf einem dieser Bilder die Markertafel 7 zu sehen sein muss, um eine Skalierungsinformation zu erhalten.

Auf Bildern, die vom Grund aufgenommen werden, sind jedoch beispielsweise die Türen 4 zu den Balkonen 3 in den oberen Geschossen nicht sichtbar.

In einem zweiten Schritt I wird daher die Teleskopstange 10 so eingestellt, dass die Kamera 9 im ersten Obergeschoss über den Balkon 3 die Tür 4 im Bildfeld hat. Dabei kann die Längeneinstellung sowie die Ausrichtung jederzeit im Live-Bild der Anzeigevorrichtung 17 kontrolliert werden. Sobald die interessierenden Details im Bild sind, wird über den Auslöser an der Anzeigevorrichtung 17 ein Bild aufgenommen und als Rohdaten in der Kamera 9 gespeichert.

Zusätzlich kann eine Abstandsmessung vorgenommen werden, um den Abstand 19 zur Tür zu bestimmen.

In einem weiteren Schritt wird die Teleskopstange 10 weiter verlängert, so dass wie in II gezeigt, der Balkon 3 des zweiten Obergeschosses im Bildfeld ist.

Sind alle Bilder aufgenommen, können die Rohbilddaten über die Funkschnittstelle 18 zur Anzeigevorrichtung 17 übertragen werden.

Die Anzeigevorrichtung 17 kann nun eine Bildverarbeitungsvorrichtung aufweisen, mit der aus den aufgenommenen Bildern das 3D-Modell berechnet wird. Dies kann durch bekannte Programme oder Algorithmen erfolgen.

Die Rohbilddaten können jedoch auch auf anderer Weise aus der Kamera 9 ausgelesen werden, oder an eine Berechnungseinheit übertragen werden.

Insbesondere vorteilhaft ist es, wenn zur Identifizierung von Merkmalen robuste und präzise Punkt- oder Kantenmerkmale verwendet werden. Dabei sind robuste Merkmale solche, die durch Algorithmen in verschiedenen Bildern zuverlässig eindeutig identifiziert und einander zugeordnet werden können. Auf diese Weise lassen sich die Bilder zueinander registrieren. Diese robusten Merkmale liegen jedoch meist nicht an solchen Stellen in den Bildern, die für das Aufmaß von Interesse sind.

Aus diesem Grund werden auch präzise Merkmale bestimmt, die an interessanten Stellen liegen, etwa an Kanten, die beispielsweise Türen oder Fenster bilden. Präzise Merkmale können in den Rohdaten mit sehr hohen einer Genauigkeit bestimmt werden. Durch geschickte Algorithmen und unter Zuhilfenahme der robusten Merkmale können auch die präzisen Merkmale zwischen mehreren Bildern identifiziert werden und erlauben so die Erstellung des 3D-Modells mit Subpixel-Genauigkeit.

### Bezugszeichenliste

- 1: Fassade
- 2: Gebäude
- 3: Balkon
- 4: Tür
- 5: Benutzer
- 6: Aufmaßgerät
- 7: Markertafel
- 8: Ständer
- 9: Kamera
- 10: Teleskopstange
- 11: Element
- 12: distales Ende der Teleskopstange
- 13: Aufnahmeeinheit
- 14: Standfuß
- 15: Boden
- 16: proximales Ende der Teleskopstange
- 17: Anzeigevorrichtung
- 18: Funkschnittstelle
- 19: Abstand
- 20: Abstandssensor

## Patentansprüche

1. Aufmaßgerät (6), mit einer Bildaufnahmevorrichtung (9) zur Aufnahme von Bildern eines zu vermessenden Objekts (1), **dadurch gekennzeichnet, dass** das Aufmaßgerät (6) eine längenvariable Haltevorrichtung (10) aufweist, dass die Bildaufnahmevorrichtung (9) an der Haltevorrichtung (10) angeordnet ist, dass am proximalen Ende (16) der Haltevorrichtung (10) eine Anzeigevorrichtung (17) für eine Darstellung, insbesondere Echtzeitdarstellung, eines Bildes von der Bildaufnahmevorrichtung (9) angeordnet ist und dass vom proximalen Ende (16) der Haltevorrichtung aus ein Bildaufnahmevorgang auslösbar ist.

2. Aufmaßgerät (6) nach Anspruch 1, **dadurch gekennzeichnet, dass** die Haltevorrichtung als Teleskopstange (10) ausgebildet ist.

3. Aufmaßgerät (6) nach Anspruch 1 oder 2, **dadurch gekennzeichnet, dass** die Bildaufnahmevorrichtung (9) am distalen Ende (12) der Haltevorrichtung (10) angeordnet ist.

4. Aufmaßgerät (6) nach einem der Ansprüche 1 bis 3, **dadurch gekennzeichnet, dass** zwischen der Bildaufnahmevorrichtung (9) und der Anzeigevorrichtung (17) eine, insbesondere drahtgebundene oder drahtlose, Datenverbindung (18) besteht, über die Bild- und/oder Steuerdaten übertragbar sind.

5. Aufmaßgerät (6) nach einem der Ansprüche 1 bis 4, **dadurch gekennzeichnet, dass** die Bildaufnahmevorrichtung (9) zur Komprimierung von Bilddaten und zur Datenübertragung der komprimierten Bilddaten über die Datenverbindung (18) eingerichtet ist und/oder dass die Bildaufnahmevorrichtung (18) zur Speicherung der unkomprimierten Bilddaten eingerichtet ist, insbesondere in einem Bilddatenspeicher.

6. Aufmaßgerät (6) nach einem der Ansprüche 1 bis 5, **dadurch gekennzeichnet, dass** die Anzeigevorrichtung (17) zur Steuerung der Bildaufnahmevorrichtung (9) eingerichtet ist, insbesondere zum Auslösen eines Bildaufnahmevorgangs.

7. Aufmaßgerät (6) nach einem der Ansprüche 1 bis 6, **dadurch gekennzeichnet, dass** die Bildaufnahmevorrichtung (9) einen Globalverschluss und/oder ein Fischaugenobjektiv besitzt.

8. Aufmaßgerät (6) nach einem der Ansprüche 1 bis 7, **dadurch gekennzeichnet, dass** die Haltevorrichtung (10) einen Fuß (14) zum Abstellen auf einer Unterlage (15) und/oder einen Handgriff aufweist.

9. Aufmaßgerät (6) nach einem der Ansprüche 1 bis 8, **dadurch gekennzeichnet, dass** die Haltevorrichtung (10) eine beweglich gelagerte Aufnahmeeinheit (13) für die Bildaufnahmeeinrichtung (9) aufweist und die Aufnahmeeinheit (13) über einen fernsteuerbaren, insbesondere elektrischen und/oder hydraulischen, Antrieb vom proximalen Ende (16) der Haltevorrichtung (10) und/oder durch die Anzeigevorrichtung (17) ausrichtbar ist.

10. Aufmaßgerät (6) nach einem der Ansprüche 1 bis 9, **dadurch gekennzeichnet, dass** ein Abstandssensor (20) ausgebildet, insbesondere in die Bildaufnahmevorrichtung (9) integriert, ist, mit welchem ein Abstand (19) zu dem Objekt (1, 3, 4) messbar ist.

11. Verfahren zur Erstellung eines 3D-Modells mit einem Aufmaßgerät (6) nach einem der vorangehenden Ansprüche, **dadurch gekennzeichnet, dass** die Haltevorrichtung (10) auf eine erste Länge eingestellt wird und damit wenigstens ein Bild eines Objekts (1, 3, 4) aufgenommen wird, dass die Haltevorrichtung (10) danach auf eine zweite Länge eingestellt wird, die eine Aufnahme von Bildern mit ausreichend vertikaler Überdeckung zur ersten Länge erlaubt und Bilder des Objekts (1, 3, 4) aufgenommen werden und dass die Länge so lange verändert wird, bis das Objekt vollständig aufgenommen ist und dass aus den aufgenommenen Bilddaten ein 3D-Modell berechnet wird.

12. Verfahren nach Anspruch 11, **dadurch gekennzeichnet, dass** an dem Objekt (1) zuerst eine Markertafel (7) angeordnet wird, die in wenigstens einem Bild aufgenommen wird und daraus eine Skalierungsinformation für das 3D-Modell gewonnen wird.

13. Verfahren nach Anspruch 11 oder 12, **dadurch gekennzeichnet, dass** zur Registrierung der einzelnen Bilder zueinander robuste und präzise Bildmerkmale in den Bildern identifiziert und einander zugeordnet werden.
